# EUROPEAN PATENT APPLICATION

(11) **EP 4 368 358 A1**
(43) Date of publication of application: **15.05.2024**
(21) Application number: 23207552.3
(22) Date of filing: 02.11.2023
(51) Int. Cl.: B26D 5/00, B26D 7/22, B26D 1/12

(54) **FOOD PRODUCT SLICER WITH OPTICAL KNIFE EDGE EVALUATION**

(30) Priority: 10.11.2022 US 202263424252 P; 27.10.2023 US 202318496216
(71) Applicant: Illinois Tool Works Inc., Glenview IL 60025 (US)
(72) Inventor: BIRD, Matthew W., Glenview, 60025 (US); LEUNG, Lawrence S., Glenview, 60025 (US); JONES, Thomas P., Glenview, 60025 (US)
(74) Representative: HGF

(57) **Abstract**

A food slicer for slicing food items includes a slicer body, a slicer knife mounted for rotation relative to the slicer body, the slicer knife having a peripheral cutting edge, and an associated knife drive motor. A food product carriage is mounted to the slicer body for reciprocating movement back and forth past a cutting zone of the slicer knife. A knife edge evaluation system includes at least one imaging device positioned and configured for imaging the peripheral cutting edge.

## Description

### TECHNICAL FIELD

This application relates generally to food product slicers used for slicing bulk food products and, more specifically, to a food product slicer including an imaging device for knife edge evaluation.

### BACKGROUND

Typical reciprocating food slicers have a rotatable, circular or disc-like slicing blade (the slicer knife), an adjustable gauge plate for determining the thickness of the slice and a carriage for supporting the food as it is moved back and forth past the cutting edge of the knife during slicing. A drive motor may be linked to drive the carriage back and forth during an automatic slicing operation carried out by a controller of the slicer. The gauge plate is situated along the edge of the knife toward the front of a slicing stroke and is laterally movable with respect to the knife for determining the thickness of the slices to be cut. These slicers are commonly used in restaurant and grocery businesses, among others.

Such slicers have a knife that requires regular sharpening to maintain good slice performance. A sharpener is generally included with or integral to the machine to allow the operator to sharpen the slicer knife.

It is difficult for an operator to objectively determine if the slicer knife needs to be sharpened. It can be apparent to an experienced operator that the knife is dull because the machine is not slicing as well as it should. But, by the time such an operator determination is made, it is arguably too late. It is also difficult to objectively determine when the sharpening process has been adequately and properly completed. To overcome these challenges, many operators will either over sharpen or under sharpen. Over sharpening often occurs to ensure there is always proper performance, but generally reduces the life of the knife significantly. Under sharpening often occurs either because frequent sharpening is not being performed correctly (operator error or bad sharpener) or the operator is not aware that sharpening is needed.

Attempts at solving this issue have focused on trying to predict when sharpening will be needed (by counting knife revolutions, product tray strokes, or time) or by measuring load on the machine (specifically motor current). Theorizations have been made for how to automate the sharpening process as well. For example, U.S. Patent No. 8,220,383, the entirety of which is incorporated herein by reference, discloses a sharpener with a timed sharpening operation where a slicer operating parameter (e.g., slicing strokes) can be monitored and a sharpen knife annunciator (e.g., a light element) triggered when the operating parameter reaches a certain level (e.g., set threshold number of slicing strokes).

A shortcoming of the predictive methods is that they are not very accurate. Prediction based on time, number of strokes, or knife revolutions ignores a large variable in knife wear, which is the type of product being sliced and how quickly the product is sliced.

A shortcoming of the load measuring method is that it is not feasible to accurately measure the load on the motor in a way that gives good data on the knife efficiency. The load on the knife motor is determined by the sharpness of the knife, how hard the operator pushes, and the type of product being sliced. Since this method cannot predict or measure the other two variables, it is difficult to get good data. Even if this data could be gathered and was the only variable directly related to knife sharpness, the knife would need to become extremely dull before it would be feasible to determine a reduction in performance is occurring.

Further, the previous solutions fall short under these additional conditions: the sharpener is out of alignment, the sharpener stones are worn, the sharpener was not used to fully sharpen the knife edge, the knife is damaged or chipped.

It would be desirable to provide a slicer that can adequately determine one or more of how sharp the knife is, if a knife needs to be sharpened, if sharpening has been completed, and/or if the knife is of good/acceptable quality (or needs to be replaced).

### SUMMARY

In one aspect, a food slicer for slicing food items includes a slicer body; a slicer knife mounted for rotation relative to the slicer body, the slicer knife having a peripheral cutting edge, and an associated knife drive motor; a food product carriage mounted to the slicer body for reciprocating movement back and forth past a cutting zone of the slicer knife; and a knife edge evaluation system, including at least one imaging device positioned and configured for imaging the peripheral cutting edge.

In implementations, the imaging device comprises a camera that captures images of the peripheral cutting edge and the knife edge evaluation system further comprises a controller for evaluating the images, wherein the knife edge evaluation system is configured to evaluate the images to determine a condition of the peripheral cutting edge indicative of the slicer knife requiring sharpening.

In implementations, the imaging device comprises a digital camera that captures images of the peripheral cutting edge, and the knife edge evaluation system further comprises a display device on which the images are displayable.

In implementations, the imaging device comprises a lens arrangement with an associated eyepiece mounted or mountable on the slicer body.

The details of one or more embodiments are set forth in the accompanying drawings and the description below. Other features, objects, and advantages will be apparent from the description and drawings, and from the claims.

### BRIEF DESCRIPTION OF THE DRAWINGS

Fig. 1 is a side elevation of a food product slicer; and
Fig. 2 a schematic depiction of a slicer knife edge evaluation system.

### DETAILED DESCRIPTION

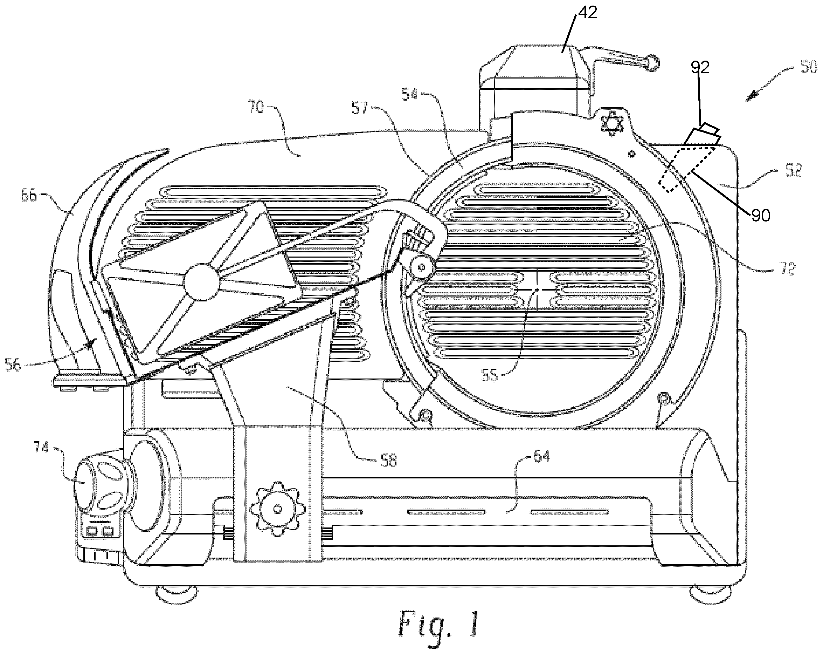

Referring to Fig. 1, a food product slicer 50 includes a housing or base 52 and a circular, motor-driven slicing knife 54 that is mounted to the housing for rotation about an axis 55. Fig. 1 depicts a right side view of the slicer. The left side of Fig. 1 is generally referred to as the front side of the slicer (which is where an operator stands for slicing), the right side of Fig. 1 is generally referred to as the rear side of the slicer. A food product can be supported on a manually operable food carriage 56 which moves the food product to be sliced past the cutting edge 57 of the rotating slicing knife 54. The food carriage 56 reciprocates from left to right relative to Fig. 1, along a linear path so that the lower end of the bulk food product slides along the surface of the gauge plate 70, is cut by the knife 54 and then slides along a stationary knife cover plate 72. Food carriage 56 includes a tray mounted on a tray arm 58 that orients the food carriage tray at the appropriate angle (typically perpendicular) to the cutting edge plane. The food carriage reciprocates in a slot 64 at a lower portion of the housing 52 and a handle 66 is mounted to the food carriage 56. The handle is graspable by a user and can be used to manually move the food carriage in a manual only mode. The carriage may also be automatically driven (e.g., as by a motor drive or other prime mover) in an automatic mode. A manual assist mode may also be provided. In another implementation the manual only mode may be eliminated such that automatic or manual assist are the available modes for slicing. A handle or knob 74 for adjusting the gauge plate to control slice thickness is also shown.

The illustrated position of the food carriage 56 is the most forward or front position relative to the slicer knife 54, typically the starting position for a slicing stroke. This position is also sometimes referred to as the home position of the carriage.

A sharpening assembly 42 is mounted on the slicer. By way of example, a sharpener assembly similar to those described in U.S. Patent No. 7,134,937 may be used.

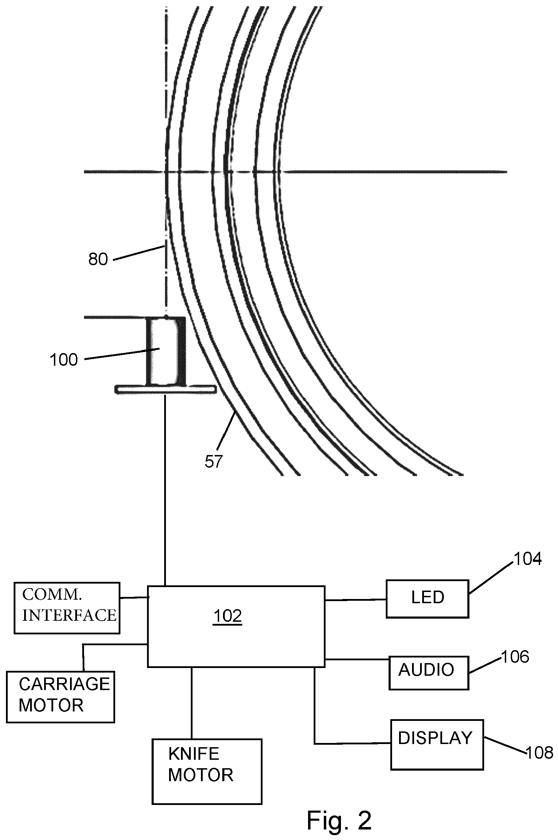

Referring to Figs. 2, the slicer includes an optical knife edge evaluation system that includes a camera 100 (or cameras, or other image capture device(s)) and an associated controller 102. The term controller as used herein is intended to broadly encompass any circuit (e.g., solid state, application specific integrated circuit (ASIC), an electronic circuit, a combinational logic circuit, a field programmable gate array (FPGA)), processor (e.g., shared, dedicated, or group - including hardware or software that executes code) or other component, or a combination of some or all of the above, that carries out the control functions of the machine or the control functions of any component thereof.

The camera 100 is positioned to take a image or video of the knife edge 57 so as to determine from the image/video if the knife edge is sharp (e.g., the controller 102 is configured to evaluate the image/video). One possible configuration involves bringing a camera as close to the theoretical parallel section cut of a circular knife knife. For example, orienting the viewing direction of the camera substantially in line with a line 80 running tangent to the circular edge of the knife. Alternative configurations might include positioning the camera(s) to provide images of the knife edge (at varying angles), images of the knife silhouette, or images of the knife edge reflection.

Due to the geometric constraints of camera working distance when positioning a camera as per Fig. 2, use of specific lens configurations to achieve the required magnification for the given working distance may be required. Magnification components like a macro lens, extension tube, or macro filter may be used to obtain good images of the knife edge itself, representing a unique application of camera magnification/optics. The image magnification utilized may be at the edge of microscopic range, but with a large working distance.

The exact methodology of image evaluation may vary. The camera captures an image/video, and the controller analyzes it with standard computer vision techniques and specific object detection algorithms to obtain quantifiable and objective data. This evaluation process can be done efficiently and quickly enough to process individual images during a video stream and give live analysis of the knife via a video stream. These quantifiable data are then used to compare the knife to what it should look like. If the knife is out of set thresholds, it will be deemed as not sharp.

In embodiments, the controller may be configured to compare captured images of the knife edge to predetermined stored images of a sharp knife to make the determination.

In embodiments, the controller may be configured with an image processing algorithm, such as a Canny edge detection algorithm. Standard pre-processing for edge detection algorithms dictates to grayscale and then intentionally blur the image to reduce noise. Edge detection algorithms are 'measuring' pixel intensity changes, so color is not relevant. Noise reduction is also used because calculating the derivatives of raw pixel intensities results in large fluctuations (and false importance given to unimportant potential edges). Smoothing the intensity variation near edges helps the program find the dominant edge structure easier. Further processing of the image is then done to represent the edges as straight lines. Hough Line Transform is an exemplary algorithm that may be used. The `probabilistic' version is generally considered best. This step takes the image data from 'image space' to something that can be manipulated and analyzed with equations and variables.

In embodiments, pre-processing can be used to provide higher resolution. For example, the controller may be configured to convert to the HSV (for hue, saturation, value; also known as HSB, for hue, saturation, brightness) color space. Translating to this color space doe not give humans a helpful perception of an image, but it can help a computer "see" the parts of an image that may be more important. The edge detection operations can then be performed on an HSV color spectrum rather than an image in RGB. In another example, the controller may be configured to carry out thresholding to create a binary image. Determining a threshold of a higher light value than the background and then turning anything over that into a white pixel helps to get an exact outline of what can be determined from an image. If the image can be taken with a similar background, and there is no distortion, or reflection issues, thresholding provides a sound approach to determining the profile of the blade.

In embodiments, zeroing the frame and image is carried out in order to compare images. Zeroing also helps account for manufacturing variances. Zeroing is also advantageous because the knife will also change size over time as it is progressively sharpened. Zeroing the image can be carried out by recognizing edges and mapping them to a normalized geometric/equation-driven vector.

Imaging can be highly dependent on the cleanliness of the knife. Cleanliness in this case does not specifically refer to sanitation, but the lack of debris (including dust). Machine learning could be utilized to analyze knife edge profiles/shapes even if the knife is not fully clean.

In embodiments, simpler optics can be satisfactory in cases where the system only evaluates images by looking for and analyzing the reflected light band coming from the knife edge. Generally, sharper knives will reflect brighter and more consistent light bands. A light source and simple camera/optic set up (or alternatively an even simpler photodiode) can be used to infer the sharpness of the knife. In such cases, the controller would be configured to compare relative light intensity at specific locations on the knife.

Once the controller determines that the knife is no longer sharp, the controller communicates such information to the operator. This communication could be any of an LED 104 (or other light element providing a visual indicator) or audio annunciator 106, that is on for as long as the knife is unsharp, and the status of which may be continually updated. Alternatively, a display screen interface 108 (an HMI) could be provided on the slicer. The system not only communicates (to the operator) when the knife needs to be sharpened, but also communicates when the knife has been fully sharpened. For example, the system may continually analyze knife edge images while sharpening is taking place and the knife not sharp communication via the LED, audio annunciator or display screen is stopped once the knifed is determined to be sharp (e.g., the optical system evaluates the knife edge during sharpening and updates when the knife is again sharp).

The system can also advise the operator if the sharpener is not sharpening the knife (e.g., if the knife edge is not sharp after a set duration of knife sharpening, the system provides a specific output to indicate the sharpener is not sharpening (e.g., a specific pattern of blinks of the LED, an audio message or a visual message display on a display screen)).

In some implementations, the system may be able to identify a chipped condition on the knife by taking a video of the knife while the knife rotates, essentially scanning the entire knife. Again, the system can provide an output notifying the operator of this condition (e.g., a specific pattern of blinks of the LED, an audio message or a visual message display on a display screen).

In some implementations, the system may identify if the knife is wobbling or out of alignment, and provide an output to alert the operator (e.g., a specific pattern of blinks of the LED, an audio message or a visual message display on a display screen).

In some implementations, the system may identify if the knife has worn too much, and needs to be replaced (e.g., if the location of the knife edge is determined to be more than a set distance away from an expected location of the knife edge) and provide an output notifying the operator of this condition (e.g., a specific pattern of blinks of the LED, an audio message or a visual message display on a display screen).

In some implementations, the system may be configured to show a video/image of the knife edge for service personnel or an operator to enable better troubleshooting of slicing problems or verification of the sharpness of the knife.

In some implementations, the system could be configured as a portable/separate component from the slicer. Such a system could include a self-contained battery-powered adaptation of the above features, enabling the system to operate as a sharpness indicator for any type of circular knife. In some implementations, such a stand-alone system could also be combined with a suitable fixture to determine sharpness of kitchen knives or other non-circular knifes.

By way of example, a slicer utilizing the above-described optical system provides various advantages, such as: the determination of knife sharpness is no longer operator dependent; requiring less time/effort to determine if the knife is sharp; more accurate sharpness determinations; preventing over sharpening of the knife, resulting in longer knife life; maintaining the knife in a sharper state at all times, providing better slicing performance; providing the ability to better troubleshoot slicing issues using a image/video of the knife edge; providing the ability to fully integrate automatic sharpening into a slicer (e.g., using a powered, actuatable sharpener), with the system determining when to sharpen and when sharpening is complete; providing the ability to determine if a knife is out of alignment or wobbling; providing an objective determination of a knife edge/performance; providing the ability to communicate with the operator that a knife has passed its useful life because too much of the knife edge has been ground away; providing the ability to communicate to the operator that the knife is damaged; predicting how much longer a knife can be used before it will need to be replaced; providing, in the case of stand-alone implementations, a unit with the ability to evaluate all knives of all slicers in a given deli/kitchen; and/or providing the ability to evaluate non-circular knifes (e.g., kitchen knives).

It is to be clearly understood that the above description is intended by way of illustration and example only, is not intended to be taken by way of limitation, and that other changes and modifications are possible. For example, as an alternative to optical image sensing of the knife edge, other knife edge sensing devices/systems could be implemented. A capacitive sensing system could be implemented by placing capacitance sensor probe(s) near the cutting edge, with changing knife edge radius changes measured capacitance. As another example, a light reflection system could be implemented, in which light is reflected off the of the knife edge and a light sensor is used to determine if the amount of light or the orientation/pattern of light indicates a sharp or dull knife edge. As another example, a refraction system could be implemented, in which light is shown and mostly obstructed by the knife edge, with changes in knife radius resulting in changes in refraction properties which ultimately changes light intensity that is refracted around the knife edge, which can be detected (e.g., with a photodiode), measured and evaluated.

In another embodiment, the slicer may include an imaging device in the form of a built-in lens system 90 with an associated eyepiece 92 mounted on the slicer and through which an operator or maintenance/service personnel can look to view the condition of the knife cutting edge. This system would better facilitate operator determination of knife edge condition (e.g., when to sharpen, when the knife needs to be replaced).

## Claims

1. A food slicer for slicing food items, comprising:
a slicer body;
a slicer knife mounted for rotation relative to the slicer body, the slicer knife having a peripheral cutting edge with an associated cutting zone, and an associated knife drive motor;
a food product carriage mounted to the slicer body for reciprocating movement back and forth past the cutting zone of the slicer knife;
a knife edge evaluation system, including at least one imaging device positioned and configured for imaging the peripheral cutting edge.

2. The food slicer of claim 1, wherein the imaging devices comprises a camera that captures images of the peripheral cutting edge and the knife edge evaluation system further comprises a controller for evaluating the images, wherein the knife edge evaluation system is configured to evaluate the images to determine a condition of the peripheral cutting edge indicative of the slicer knife requiring sharpening.

3. The food slicer of claim 2, wherein the controller is configured to process the images to determine a profile of the peripheral cutting edge.

4. The food slicer of claim 2, wherein the controller is configured to carry out edge detection on the images.

5. The food slicer of claim 4, wherein the controller is configured to pre-process the images before carrying out edge detection.

6. The food slicer of claim 5, wherein the pre-processing involves conversion of images to the HSV space.

7. The food slicer of claim 5, wherein the pre-processing involves application of thresholding to pixels of the images.

8. The food slicer of claim 2, wherein the controller is configured to zero the images mapping to a vector.

9. The food slicer of claim 2, wherein the knife edge evaluation system is configured to provide an output to alert an operator that the slicer knife requires sharpening.

10. The food slicer of claim 2, wherein the knife edge evaluation system is configured to evaluate images of the peripheral cutting edge during knife sharpening to determine a condition of the peripheral cutting edge indicative of the slicer knife being sharp, and to provide an output to alert an operator that the slicer knife is sharp.

11. The food slicer of claim 2, wherein the knife edge evaluation system is configured to evaluate images of the peripheral cutting edge during knife sharpening to determine a condition indicative of the slicer knife not being sharpened, and to provide an output to alert an operator that knife sharpener is not sharpening the slicer knife.

12. The food slicer of claim 2, wherein the knife edge evaluation system is configured to evaluate images of the peripheral cutting edge during knife sharpening to determine a condition indicative of the peripheral cutting edge indicative of the slicer knife having reached an end of useful life, and to provide an output to alert an operator that slicer knife requires replacement.

13. The food slicer of claim 2, wherein the knife edge evaluation system is configured to evaluate images of the peripheral cutting edge to determine a condition of the peripheral cutting edge indicative of the peripheral cutting edge being damaged, and to provide an output to alert an operator that slicer knife is damaged.

14. The food slicer of claim 2, wherein the imaging device comprises a lens arrangement with an associated eyepiece mounted or mountable on the slicer body.

15. The food slicer of claim 1, wherein the imaging device comprises a digital camera that captures images of the peripheral cutting edge, and the knife edge evaluation system further comprises a display device on which the images are displayable.
